# EUROPÄISCHE PATENTSCHRIFT

(11) **EP 3 712 460 B1**
(45) Veröffentlichungstag und Bekanntmachung des Hinweises auf die Patenterteilung: **09.08.2023**
(21) Anmeldenummer: 20158167.5
(22) Anmeldetag: 19.02.2020
(51) Int. Cl.: F16D 69/02, F16D 69/00

(54) **BINDEMITTELFREIE REIBBELÄGE, VERFAHREN ZU IHRER HERSTELLUNG UND IHRE VERWENDUNG**
BINDER-FREE FRICTION LININGS, METHOD FOR THEIR PREPARATION AND THEIR USE
GARNITURE DE FRICTION SANS LIANT, SON PROCÉDÉ DE FABRICATION ET SON UTILISATION

(30) Priorität: 22.03.2019 DE 102019107368
(43) Veröffentlichungstag der Anmeldung: 23.09.2020
(73) Patentinhaber: TMD Friction Services GmbH, 51381 Leverkusen (DE)
(72) Erfinder: LEWIS, Richard, 40822 Mettmann (DE); PERIN, Paulo, 21035 Hamburg (DE)
(74) Vertreter: Müller, Eckhard

(56) Entgegenhaltungen:
- EP-A1- 3 124 814
- DE-T2- 69 520 129

## Beschreibung

Die vorliegende Erfindung betrifft Semi-Metallic und Low-Metallic Reibbeläge für Kraftfahrzeuge, bevorzugt Reibbeläge für Scheibenbremsen von Personenkraftwagen, die entweder kein Bindemittel oder nur einen gegenüber dem Stand der Technik deutlich reduzierten Anteil an Bindemittel oder Bindemitteln aufweisen, sowie Verfahren zu deren Herstellung.

In der KFZ-Technik werden grundsätzlich vier verschiedene Kategorien von Reibbelägen (auch Reibmittel genannt) unterschieden, wobei die Abgrenzungen zwischen diesen Kategorien fließend sind: Semi-Metallic, Organic, Low-Metallic und Ceramic. Insgesamt werden bis zu 15 verschiedene und bei organischen Reibbelägen sogar bis zu 30 verschiedene Werkstoffe bei deren Herstellung eingesetzt.

Semi-Metallic Reibbeläge enthalten bevorzugt 30 bis 65 Gew.-% Metall, das z.B. mit Graphit, Füllstoffen und Bindemitteln vermischt wird. Sie zeichnen sich durch eine lange Haltbarkeit und eine geringere Wärmeentwicklung beim Bremsen aus. Nachteilig können bei diesen Belägen ein höherer Verschleiß der Bremsscheiben und auftretendes Reibungsquietschen sein.

Reibbeläge der Kategorie Organic (einschließlich NAOs = non asbestos organic) werden aus Fasern hergestellt, die aus Glas, Gummi oder Kohlenstoff gewonnen werden. Hinzu kommen Füllstoffe und hitzebeständige Kunst- und/oder Naturharze als Bindemittel. Bremsbeläge aus diesen Reibmaterialien sind meistens weicher und leiser, verschleißen jedoch auch schneller, verursachen mehr Bremsstaub und haben, vor allem wenn sie heiß werden, schlechtere Reibungswerte und damit eine verschlechterte Bremsleistung.

Low-Metallic Reibbeläge stellen einen Mix aus bevorzugt 10 bis 30 Gew.-% Metall und organischen Stoffen dar, wie diese auch für die Kategorie Organic verwendet werden. Beläge aus diesen Materialien weisen ein verbessertes Bremsverhalten auf, besonders bei hohen Fahrzeuggeschwindigkeiten. Nachteilig ist auch hier insbesondere die erhöhte Entstehung von Bremsstaub.

Keramik-Reibbeläge sind NAOs. Sie bestehen aus keramischen Fasern, Füllstoffen und Bindemitteln und können unter Umständen auch geringe Metallanteile aufweisen. Diese Beläge sind bezüglich der eingesetzten Materialien und des Herstellungsprozesses zwar teurer als andere Reibmaterialien, dafür ist aber z.B. der auftretende Verschleiß an den Bremsscheiben geringer.

Allen genannten Kategorien an Reibbelägen oder Reibmaterialien ist gemeinsam, dass diese Bindemittel, meist in Form von Natur- oder Kunstharzen, insbesondere in Form von Phenolharzen, aufweisen. Während des Pressvorgangs der Reibmaterialmischungen zu den eigentlichen, geformten Reibbelägen bei erhöhter Temperatur und erhöhtem Druck verflüssigt sich das Bindemittel weiter, durchdringt die gesamte Reibmaterialmischung und carbonisiert bzw. verharzt, wobei die bei dem Verharzungsvorgang entstehenden flüchtigen Bestandteile aus der Pressform bzw. aus der Mischung entweichen. Dadurch werden sämtliche Mischungsbestandteile durch das verharzte Bindemittel miteinander verbunden. Um diesen Vorgang möglichst vollständig zu gestalten, werden die erhaltenen Bremsbeläge, also Trägerplatte mit darauf aufgebrachtem Reibbelag, noch in einem Aushärteofen bei erhöhter Temperatur nachbehandelt oder möglichst vollständig ausgehärtet; vgl. dazu z.B. DE 10 2014 105 484 A1, in der verschiedene Methoden zur thermischen Behandlung und/oder Härtung von Reibbelägen beschrieben werden.

Doch auch nach diesem Prozessschritt sind in dem Reibbelag noch nicht ausgehärtete Bindemittelanteile vorhanden. Werden die Bremsbeläge nun verbaut, treten ungehärtete Bindemittelanteile, beeinflusst durch die beim Bremsen am Reibbelag entstehenden hohen Temperaturen, an die Reibbelagoberfläche, was dort zu ausgeprägten Verhärtungen führt. Dadurch wird bei neuen Brems- bzw. Reibbelägen die Bremsleistung in der Einfahrphase deutlich gemindert, was als sogenanntes Greenfading bezeichnet wird. Um dieses Problem zu umgehen, werden die sich auf der Trägerplatte befindlichen Reibbeläge vor dem Einbau einem sogenannten Scorching unterzogen. Bei diesem Vorgang werden die Bremsbeläge über einen definierten Zeitraum z.B. mit einer Gasflamme oder IR-Strahlung wärmebehandelt, wobei an der Reibbelagoberfläche Temperaturen von ca. 400 °C bis ca. 700 °C oder mehr erzeugt werden. Dadurch werden die ungehärteten Bindemittelanteile ausgetrieben, und der Bremsbelag wird sozusagen im Fertigungsbetrieb eingefahren.

Für den speziellen Fall der Herstellung von Keramik-Reibbelägen wird in der EP 3 124 814 A1 der Verzicht auf Bindemittel bei deren Herstellung vorgeschlagen. Diese Reibbeläge enthalten keine Metalle oder metallischen Komponenten und der zunächst erhaltene sogenannte Grünkörper muss einer sogenannten reactive melt infiltratiion unterzogen werden, bei der flüssiges Silizium oder Siliziumlegierungen mit dem im Grünkörper enthaltenen Kohlenstoff zu (keramischem) Siliziumcarbid (SiC) reagiert.

Weiterhin sind im Stand der Technik bindemittelfreie Reibbeläge beschrieben.

Die DE 1 425 261 A offenbart einen bindemittelfreien Reibbelag, der durch Pressen und Sintern aus Metallfasern und Füllstoffen hergestellt wird. Das Reibungsmaterial soll in Kupplungen, Bremsen und Getrieben eingesetzt werden.

Die GB 931631 A bezieht sich auf einen Reibbelag für eine Flugzeugbremse, der ebenfalls durch einen Sinterprozess aus Metallfasern und Füllstoffen hergestellt wird.

Die DE103 48 076 A1 betrifft ebenfalls einen Reibbelag, der ohne Bindemittel hergestellt werden kann und aus einem gesinterten Faserverbund, vorzugsweise aus Polyamidfasern, besteht.

Die US 2015/017945 A1 offenbart einen Reibbelag für eine Fahrzeugbremse, welcher auf Faserbasis hergestellt wird und einen Anteil an Bindemittel von 2 bis 30 Vol% besitzt.

DE 695 20 129 T2 betrifft ein gesintertes Reibungsmaterial, das einen sog. Kupferlegierungsgrundwerkstoff enthalten muss. Eisenlegierungen aus der Gruppe FeMo, FeCr, FeTi, FeW und FeB und expandierter Graphit sind weitere Bestandteile.

Aufgabe der vorliegenden Erfindung war daher die Bereitstellung von weiteren Reibbelagmischungen bzw. Reibbelägen, die sich möglichst kostengünstig herstellen lassen, bei gleichzeitiger hoher Qualität und hohem Eigenschaftsprofil der resultierenden Reibbeläge, einschließlich eines entsprechenden Herstellungsverfahrens, bei dem die aus dem Stand der Technik bekannten Nachteile oder auch bislang notwendige Verfahrensschritte möglichst weitgehend vermieden werden können.

Gelöst wird die Aufgabe erfindungsgemäß durch einen Semi-Metallic oder Low-Metallic Reibbelag, der keine Bindemittel oder nur einen sehr geringen Anteil an Bindemitteln enthält. Der Anteil an Bindemitteln beträgt bis maximal 2,5 Gew.-% (hier und im Folgenden alle Gew.-% - Angaben bezogen auf die fertige Reibmaterialmischung, aus der der eigentliche Reibbelag hergestellt wird), weiter bevorzugt bis maximal 1 Gew.-%, insbesondere bis max. 0,9 Gew.-% und besonders bevorzugt 0 Gew.-%. Hierfür sind insbesondere organische oder anorganische Bindemittel geeignet, die beim Heißpressen im Bereich von 100°C bis 200 °C aushärten. Als Bindemittel können die für Reibbeläge üblichen Bindemittel, wie z.B. Phenolharze, Novolake als Kondensationsprodukte aus Formaldehyd und überschüssigem Phenol, Polyimide, Cyanatester, Phthalonitrilharze, und Silikonharz eingesetzt werden, wobei die Phenolnovolakharze erfindungsgemäß bevorzugt sind. Als Bindemittel können auch Bindemittelgemische verwendet werden.

Bei den erfindungsgemäßen Reibbelägen handelt es sich um Semi-Metallic Reibbeläge mit Metallanteilen von 30 bis 65 Gew-%, wobei auch Reibbelagmischungen/Reibbeläge aus dem sogenannten Low-Metallic Bereich (Metallanteil 10 bis 30 Gew.-%) von der Erfindung umfasst werden.

Für die Zwecke der vorliegenden Erfindung umfasst der Begriff Metall oder metallisch sämtliche in Semi- oder Low-Metallic Reibmaterialien auftretenden Metalle oder Metalllegierungen in allen ihren auftretenden Formen, wie z.B. Fasern, Wolle etc.

Bei den Formen sind insbesondere Fasern bevorzugt. Diese Fasern sollten nicht zu fein oder zu kurz sein, da sonst die mechanische Stabilität des entsprechenden Reibbelags leiden könnte. Zu lange Fasern oder auch Wolle können Probleme beim Mischen der Ausgangskomponenten und bei deren Verteilung in der resultierenden Reibmaterialmischung erzeugen. Die Fasern weisen vorzugszuweise einen im Wesentlichen rechteckigen Querschnitt auf und sind daher vorzugsweise nicht gezogen ausgebildet. Es werden daher bevorzugt die auf dem Gebiet der Bremsenherstellung üblich eingesetzten geschabten Fasern verwendet. Die Abmessungen solcher Fasern, die im Handel erhältlich sind, sind im Stand der Technik und dem Fachmann bekannt.

Als Metalle enthalten die erfindungsgemäßen Reibbeläge bevorzugt Eisen oder Stahl, insbesondere nicht rostenden Edelstahl, Aluminium oder Messing. Kupfer wäre ebenfalls geeignet, wird aber aufgrund bestehender umweltrechtlicher Vorschriften nicht eingesetzt. Insbesondere geeignet sind Eisen, Stahl und Edelstahl, die bevorzugt als Fasern mit den oben beschriebenen Parametern/Abmessungen vorliegen. Auch hier können verschiedene Metalle gleichzeitig eingesetzt werden.

Der bevorzugte Anteil an Metallen beträgt in der fertigen Reibbelagmischung, aus der der Reibbelag hergestellt wird, bevorzugt mindestens 30 Gew.-%, insbesondere mindestens 35 Gew.-% und besonders bevorzugt mindestens 40 Gew.-%. Der Maximalanteil an Metall beträgt 65 Gew.-%.

Die im Reibmaterial vorhandenen Metallfasern, insbesondere Stahl- oder Edelstahlfasern, reichen in der Regel aus, um dem nach dem Pressen der Reibmaterialmischung entstandenen Reibbelag die notwendige mechanische Stabilität und die notwendigen Bremseigenschaften zu verleihen.

Um die Stabilität und das Eigenschaftsprofil der erfindungsgemäßen Reibbeläge weiter zu verbessern, hat es sich erwiesen, neben den Komponenten, welche mechanisch für ein gutes Eigenschaftsprofil sorgen, mindestens eine weitere Komponente einzusetzen, welche zusätzlich auf nicht rein mechanische Art und Weise den Zusammenhalt der Reibbelagskomponenten und damit des Reibbelags selbst verstärkt. Als besonders geeignet haben sich hier expandierter Graphit und expandierter Vermiculit erwiesen. Elektrodengraphit ist für die erfindungsgemäßen Zwecke nicht geeignet. Besonders geeignet ist der expandierte Graphit oder auch Blähgraphit genannt. Graphit ist aus Graphitschichten aufgebaut, zwischen denen nur sehr schwache Bindungskräfte herrschen, wodurch sich seine guten Gleit- und Schmiereigenschaften erklären lassen. Expandierter Graphit entsteht durch die Einlagerung von Molekülen zwischen diese Graphitschichten. Durch die Einlagerung von Säuren, üblicherweise Schwefelsäure, wird Graphit in Blähgraphit umgewandelt. Bevorzugt wird Graphit mit einer Partikelgröße von ca. 0,25 mm bis ca. 1,5 mm und weiter bevorzugt von ca. 0,5 mm bis ca. 1 mm verwendet.

Bei Vermiculit handelt es sich um ein Schichtsilikat, welches zu den Tonmineralien gehört und flockige Kristalle bildet. Blähglimmer oder expandierter Vermiculit entsteht durch die Verarbeitung von Glimmerschiefer. Dabei wird Rohvermiculit thermisch expandiert, wodurch das chemisch gebundene Kristallwasser zwischen den Schichten austreibt und sich das Volumen bis zum 35-fachen des Ausgangswertes vergrößert. Expandierter Vermiculit oder Blähvermiculit ist erfindungsgemäß geeignet.

Alle genannten Materialien sind im Handel erhältlich.

Bei einem völligen oder weitgehenden Verzicht auf Bindemittel (wie z.B. Phenolharze, Novolake) bei der Reibbelagherstellung kann der Einsatz der erfindungsgemäß bevorzugten Metallfasern (insbesondere Stahl- oder Edelstahlfasern) ohne expandierten Graphit oder expandierten Vermiculit ausreichen, um Reibbeläge mit ausreichendem oder gutem Eigenschaftsprofil zu erhalten. Solche Reibbeläge oder Reibbelagmischungen sind von der vorliegenden Erfindung nicht umfasst. Der Verzicht auf Metallfasern führt nicht zu dem gewünschten Ergebnis. Erfindungsgemäß ist die Verwendung der genannten Kombination aus Metallfasern (auch in Form verschiedener Typen gleichzeitig) und expandiertem Graphit und/oder expandiertem Vermiculit (auch in Form verschiedener Typen gleichzeitig).

Allgemein werden die Metallfasern zu 30-65 Gew.-% (entsprechend der eingangs beschriebenen Reibbelagkategorie Semi-Metallic) und die zweite Materialkategorie (welche nicht allein aufgrund mechanischer Verfestigung wirkt, expandierter Graphit und/oder expandierter Vermiculit) zu 5-26 Gew.-% eingesetzt. Die Gew.-%-Angaben beziehen sich auf die fertige, zu verpressende Reibbelagmischung.

Die Herstellung der erfindungsgemäßen Reibbeläge erfolgt nach den im Stand der Technik und dem Fachmann hinlänglich bekannten Verfahren durch Mischen der Ausgangskomponenten und Pressen der Reibbelagmischung bei erhöhtem Druck und erhöhter Temperatur. Parameter hierfür sind Temperaturen von
135-240 °C bei einem Druck von 45-200 MPa für eine Dauer (Presszeit) von 50-300 Sekunden.

Grundsätzlich kann das Vorgehen zur Herstellung erfindungsgemäßer Reibbeläge auch wie folgt beschrieben werden:

Ausgehend von einer typischen Semi-Metallic Reibbelagzusammensetzung wie z.B.:

| Bestandteil | Anteil in Gew.-% |
|---|---|
| Graphit | 26 |
| Stahlfaser | 53,9 |
| Phenolharz | 0,9 |
| Petroleum koks | 8,8 |
| Calciumfluorid | 2,6 |
| Siliziumcarbid | 2,6 |
| Magnesiumoxid | 5,2 |

werden rechnerisch die Komponenten Stahlfasern und Graphit und evtl. auch das Bindemittel (hier Phenolharz) entfernt bzw. herausgerechnet und die verbleibende Zusammensetzung (hier verbleibend 19,2 Gew.-%) findet z.B. zu 60 Gew.-% Eingang in eine erfindungsgemäße Reibbelagmischung. Die noch fehlenden 40 Gew.-% bestehen dann aus erfindungsgemäßen Metallfasern, expandiertem Graphit und/oder expandiertem Vermiculit und evtl. Bindemittel, falls keine absolut bindemittelfreie Reibbelagzusammensetzung gewünscht wird. Erfindungsgemäß beträgt der Bindemittelanteil maximal 2,5 Gew.-%. Die verbleibende Zusammensetzung kann auch zu mehr oder weniger als 60 Gew.-% Eingang in die erfindungsgemäße Reibbelagmischung finden. Sie enthält die üblichen Bestandteile der genannten Reibbelagkategorien.

Bei den erfindungsgemäß bevorzugt nicht vorhandenen oder nur zu einem sehr geringen Anteil in den Reibbelägen/Reibbelagmischungen enthaltenen Bindemitteln handelt es sich um die im Stand der Technik bei der Reibbelagherstellung üblicherweise eingesetzten Bindemittel. Beispiele dazu sind vorstehend genannt. Es handelt sich in der Regel um Bindemittel, die unter den Prozessbedingungen der Reibbelagherstellung flüssig sind oder werden und dann als chemischer Kleber wirken. Für die Zwecke der vorliegenden Erfindung gelten expandierter Graphit und expandierter Vermiculit nicht als Bindemittel. Denn diese sind nicht selbstklebend, sondern realisieren unter Druck in der erfindungsgemäßen Reibbelagzusammensetzung eine mechanische Bindung.

Durch den erfindungsgemäßen vollständigen oder zumindest sehr weitgehenden Verzicht auf Bindemittel (klassische bzw. flüssige Bindemittel) wird die Produktion leistungsstarker Reibbeläge deutlich vereinfacht und verbilligt. Durch den Bindemittelverzicht wird die Produktion sehr stabil und die Reibbeläge sind einfacher reproduzierbar. Insbesondere ist darauf hinzuweisen, dass bei solchen Reibbelägen die Prozessschritte Härten (einschl. Härtungsofen) und Scorchen (einschl. entsprechender Ausrüstung) entfallen können.

## Patentansprüche

1. Semi-Metallic- oder Low-Metallic- Reibbelag für ein Kraftfahrzeug, **dadurch gekennzeichnet, dass** die zu seiner Herstellung verwendete Reibbelagmischung bindemittelfrei ist oder Bindemittel nur zu maximal 2,5 Gew.-%, bezogen auf die fertige Reibbelagmischung, enthält, und dass die verwendete Reibbelagmischung expandierten Graphit und/oder expandierten Vermiculit und 10 - 65 Gew.-% Stahlfasern enthält.

2. Reibbelag nach Anspruch 1, **dadurch gekennzeichnet, dass** die verwendete Reibbelagmischung bindemittelfrei ist.

3. Reibbelag nach Anspruch 1 oder 2, **dadurch gekennzeichnet, dass** die verwendete Reibbelagmischung Stahlfasern zu 30-65 Gew.-% enthält.

4. Reibbelag nach einem der Ansprüche 1 bis 3, **dadurch gekennzeichnet, dass** die verwendete Reibbelagmischung expandierten Graphit und/oder expandierten Vermiculit zu 5-26 Gew.-% enthält.

5. Reibbelag nach einem der Ansprüche 1- 4, **dadurch gekennzeichnet, dass** der eingesetzte Graphit eine Partikelgröße von 0,25 - 1,5 mm aufweist.

6. Reibbelagmischung nach einem der Ansprüche 1 bis 5.

7. Verwendung einer Reibbelagmischung nach Anspruch 6 zur Herstellung eines Reibbelags für ein Kraftfahrzeug umfassend die Verfahrensschritte Mischen der Ausgangskomponenten und Pressen der Reibbelagmischung bei einem Druck von 45-200 MPa und bei einer Temperatur von 135-240°C.

8. Verfahren zur Herstellung eines Reibbelags nach einem der Ansprüche 1 bis 5, **dadurch gekennzeichnet, dass** eine Reibbelagmischung nach Anspruch 6 verwendet wird und umfassend die Verfahrensschritte Mischen der Ausgangskomponenten und Pressen der Reibbelagmischung bei einem Druck von 45-200 MPa und bei einer Temperatur von 135-240°C

9. Verfahren nach Anspruch 8, **dadurch gekennzeichnet, dass** bei der Herstellung des Reibbelags auf die Prozessschritte der Härtung und des Scorchens des Reibbelags verzichtet wird.

## Claims

1. Semi-metallic or low-metallic friction lining for a motor vehicle, **characterized in that** the friction lining mixture used for producing it is binder-free or comprises binder only to a maximum of 2.5 wt.%, based on the completed friction lining mixture, and **in that** the friction lining mixture used comprises expanded graphite and/or expanded vermiculite and 10-65 wt.% of steel fibres.

2. Friction lining according to Claim 1, **characterized in that** the friction lining mixture used is binder-free.

3. Friction lining according to Claim 1 or 2, **characterized in that** the friction lining mixture used comprises steel fibres at 30-65 wt.%.

4. Friction lining according to any of Claims 1 to 3, **characterized in that** the friction lining mixture used comprises expanded graphite and/or expanded vermiculite at 5-26 wt.%.

5. Friction lining according to any of Claims 1 4, **characterized in that** the graphite used has a particle size of 0.25-1.5 mm.

6. Friction lining mixture according to any of Claims 1 to 5.

7. Use of a friction lining mixture according to Claim 6 for producing a friction lining for a motor vehicle, comprising the method steps of mixing the starting components and pressing the friction lining mixture at a pressure of 45-200 MPa and at a temperature of 135-240°C.

8. Method for producing a friction lining according to any of Claims 1 to 5, **characterized in that** a friction lining mixture according to Claim 6 is used, and comprising the method steps of mixing the starting components and pressing the friction lining mixture at a pressure of 45-200 MPa and at a temperature of 135-240°C.

9. Method according to Claim 8, **characterized in that** in the production of the friction lining, the process steps of curing and of scorching the friction lining are omitted.

## Revendications

1. Garniture de friction Semi-Metallic ou Low-Metallic pour un véhicule à moteur, **caractérisée en ce que** le mélange de garniture de friction utilisé pour sa fabrication est exempt de liant ou ne contient de liant que jusqu'à un maximum de 2,5 % en poids par rapport au mélange fini de garniture de friction, et **en ce que** le mélange utilisé de garniture de friction contient du graphite expansé et/ou de la vermiculite expansée et 10 à 65 % en poids de fibres d'acier.

2. Garniture de friction selon la revendication 1, **caractérisée en ce que** le mélange de garniture de friction utilisé est exempt de liant.

3. Garniture de friction selon la revendication 1 ou 2, **caractérisée en ce que** le mélange de garniture de friction utilisé contient 30 à 65 % en poids de fibres d'acier.

4. Garniture de friction selon l'une des revendications 1 à 3, **caractérisée en ce que** le mélange de garniture de friction utilisé contient 5 à 26 % en poids de graphite expansé et/ou de vermiculite expansée.

5. Garniture de friction selon l'une des revendications 1 à 4, **caractérisée en ce que** le graphite utilisé présente une granulométrie de 0,25 à 1,5 mm.

6. Mélange de garniture de friction selon l'une des revendications 1 à 5.

7. Utilisation d'un mélange de garniture de friction selon la revendication 6 pour fabriquer une garniture de friction pour un véhicule à moteur, comprenant les étapes consistant à mélanger les composants de départ et à presser le mélange de garniture de friction sous une pression de 45 à 200 MPa et à une température de 135 à 240 °C.

8. Procédé de fabrication d'une garniture de friction selon l'une des revendications 1 à 5, **caractérisé en ce qu'**on utilise un mélange de garniture de friction selon la revendication 6, et comprenant les étapes consistant à mélanger les composants de départ et à presser le mélange de garniture de friction sous une pression de 45 à 200 MPa et à une température de 135 à 240 °C.

9. Procédé selon la revendication 8, **caractérisé en ce que**, lors de la fabrication de la garniture de friction, on renonce aux étapes de procédé trempe et brûlage de la garniture de friction.
